# EUROPEAN PATENT APPLICATION

(11) **EP 2 876 188 A2**
(43) Date of publication of application: **27.05.2015**
(21) Application number: 14192706.1
(22) Date of filing: 11.11.2014
(51) Int. Cl.: C25D 11/12, C25D 11/18, C25D 11/24, C25D 11/30

(54) **Thermal resistant mirror-like coating**

(30) Priority: 21.11.2013 US 201361963018 P; 27.10.2014 US 201414525209
(71) Applicant: Nano And Advanced Materials Institute Limited, Kowloon, Hong Kong (CN)
(72) Inventor: Miao, Jianying, Kowloon, Hong Kong (CN); Li, Wei, Kowloon, Hong Kong (CN); Ng, Shing Hang, Kowloon, Hong Kong (CN)
(74) Representative: Modiano, Micaela Nadia

(57) **Abstract**

This invention discloses a new process of preparing highly reflective coatings with thermal resistance on substrates of metals. The thermal resistant coating layers include a mirror-like coating with high reflectivity and a transparent protective coating, which are coated on metallic substrates with surfaces pre-treated by anodizing or thermal resistant primers (base coating layers).

## Description

### Cross Reference to Related Application:

This application claims benefit from US provisional patent application serial number 61/963,018 filed November 21, 2013 and US non-provisional patent application 14/525,209 filed October 27, 2014, and the disclosure of which are incorporated herein by reference in their entirety.

### Field of the Invention:

The present invention relates to a coating, and more particularly relates to a thermal resistant mirror-like coating, and a corresponding method for fabricating the thermal resistant mirror-like coating.

### Background:

Decorative coating with mirror finish is often achieved by electroplating or vacuum deposition. However, electroplating, the conventional surface treatment, is limited by more and more governments, owing to its harm to the environment for poisonous wastes. The vacuum deposition of metals needs expensive equipment and treats products by batch, which makes the product cost be high.

US2006/0135281 A1 discloses a mirror-like coating having a fine-grained metallic layer by electroformation (electroplating) and showing a high stiffness. US2006/0135282 A1 discloses a coating with small metallic material grain with size of 2 nm to 5,000 nm. However, both of them fail to mention about thermal resistance.

CN1944710A discloses a mirror-like coating formed by the reaction of silver nitrate solution and ammonia and sodium hydroxide. The coating is then developed by borohydride. Similarly, CN101469427A discloses a mirror-like nano-coating formed by spraying the solutions of silver nitrate and potassium tartrate and sodium hydroxide. The coating is post-treated by sodium sulfite.

Electroplating is still used by US2006/0135281 A1 and US2006/0135282 A1, which can not resolve the issues of high cost and environmental pollution of the wastes. Other two Chinese patent applications just report the traditional mirror-like coating through reaction of silver but without special modification, which would result in the poor adhesion of silver mirror-like coating and oxidation issue of the silver coating.

Consequently, there is an unmet need for a mirror-like coating with high reflectivity and thermal resistance, and good adhesive property. In addition, such coating can be manufactured in an effective and environmental-friendly way.

### Summary of the Invention:

Accordingly, a first aspect of the presently claimed invention is to provide a thermal resistant mirror-like coating.

In accordance with an embodiment of the presently claimed invention, a thermal resistant mirror-like coating formed on a metal substrate comprises: a base coating layer formed on the metal substrate; and a reflective coating layer formed on the base coating layer; wherein the base coating layer is a porous anodized metal oxide layer, or a thermal resistant primer layer. Preferably, the coating further comprises a protective layer formed on the reflective coating layer.

A second aspect of the presently claimed invention is to provide methods for forming a thermal resistant mirror-like coating.

In accordance with an embodiment of the presently claimed invention, a method for forming a thermal resistant mirror-like coating on a metal substrate comprises: providing the metal substrate; anodizing a surface of the metal substrate to form a porous metallic oxide layer; and forming a reflective coating layer on the porous metallic oxide layer.

Preferably, the method further comprises a step of forming the transparent protective coating layer on the reflective coating layer, which further comprises: depositing a Mg layer or a A1 layer on the reflective coating layer; anodizing the Mg layer or the A1 layer to form an anodized Mg oxide layer or an anodized A1 layer; and sealing the anodized Mg oxide layer or the anodized A1 layer.

In accordance with another embodiment of the presently claimed invention, a method for forming a thermal resistant mirror-like coating on a metal substrate comprises: providing the metal substrate; forming a thermal resistant primer layer on the metal substrate; and forming a reflective coating layer on the thermal resistant primer layer. The step of forming the thermal resistant primer layer on the metal substrate further comprises: preparing a first primer solution comprising a silicone coupling agent; immersing the metal substrate into the first primer solution; drying the first primer solution on the metal substrate to form a first primer; preparing a second primer solution comprising a first leveling agent, a first epoxy, and a first solidifier of epoxy resin; coating the second primer solution on the first primer; heating the second primer solution to form a second primer; preparing a third primer solution comprising 4-Hygroxy-4-methyl-2-pentanone, Glycidyl 2-methylphenyl ether, a second leveling agent, a second epoxy, and a second solidifier of epoxy resin; coating the third primer solution on the second primer; and heating the third primer solution to form a third primer.

Preferably, the method further comprises a step of forming a transparent protective coating layer on the reflective coating layer comprising polysiloxane modified by nano-sized particles of TiO₂, SiO₂, Al₂O₃, ZrO₂.

This invention discloses a new process of preparing highly reflective coatings with thermal resistance on substrates of metals. The thermal resistant coating layers include a mirror-like coating with high reflectivity, which is coated on metallic substrates with surfaces pre-treated by anodizing or thermal resistant primer. The coating layers are not affected even they are heated up to a high temperature. On the mirror-like coating, a transparent coating layer might be needed to protect the mirror-like coating layer. The whole procedure of sample fabrication includes the preparation of coating mixtures and coating the mixtures on substrates.

### Brief Description of the Drawings:

Embodiments of the present invention are described in more detail hereinafter with reference to the drawings, in which:
FIG. **1** is a schematic diagram of a thermal resistant mirror-like coating comprising a porous anodized Mg/Al oxide layer according to an embodiment of the presently claimed invention;
FIG. **2** is flowchart showing the steps of a method for fabricating a thermal resistant mirror-like coating by anodization according to an embodiment of the presently claimed invention;
FIG. **3A** is a schematic diagram of a thermal resistant mirror-like coating comprising a thermal resistant primer layer according to an embodiment of the presently claimed invention;
FIG. **3B** is a schematic diagram of a thermal resistant primer layer according to an embodiment of the presently claimed invention;
FIG. **4** is a flowchart showing the steps of a method for fabricating a thermal resistant mirror-like coating comprising a thermal resistant primer layer according to an embodiment of the presently claimed invention; and
FIG. **5** is a flowchart showing the steps of forming a thermal resistant primer layer according to an embodiment of the presently claimed invention;

### Detailed Description of Preferred Embodiments:

In the following description, thermal resistant mirror-like coatings, and the corresponding embodiments of the fabrication method are set forth as preferred examples. It will be apparent to those skilled in the art that modifications, including additions and/or substitutions, may be made without departing from the scope and spirit of the invention. Specific details may be omitted so as not to obscure the invention; however, the disclosure is written to enable one skilled in the art to practice the teachings herein without undue experimentation.

In the present invention, a new process of preparing highly reflective coatings with thermal resistance on substrates of metals is disclosed. The thermal resistant coating layers include a mirror-like coating with high reflectivity and a transparent protective coating, which are coated on metallic substrates with surfaces pre-treated by anodizing or thermal resistant primers (base coating layers). The decorative coating with mirror finish and thermal resistance is fabricated on metallic substrates, especially on Mg or Al related metals. The thermal resistant mirror-like coatings of the present invention are applicable for lighting products. More particularly, the coatings are applied to high power lighting products, which produce a large amount of heat during working.

The thermal resistant coating layers include a thermal resistant primer layer or porous anodized metallic oxide layer (base coating layer), mirror-like coating layer and transparent surface coating layer. The base coating layer can enhance the adhesion of above mirror-like coating on substrates of metals, besides of resistance to heat. All of the coating layers are not affected even they are heated up to higher than 160°C. A mirror-like coating, formed on the base coating, is highly reflective. On the mirror-like coating, a transparent coating layer might be needed to protect the mirror-like coating layer.

According to an embodiment of the presently claimed invention, the thermal resistant mirror-like coating is prepared by anodizing. If Mg/Al and related alloy are used as substrates, the base coating layer might be a layer of anodization. The mirror-like coating with high reflectivity formed on the base coating, can be a metal coating layer prepared by a chemical method. The transparent coating with wearing resistance and self-cleaning on the mirror-like coating, can protect the mirror-like coating.

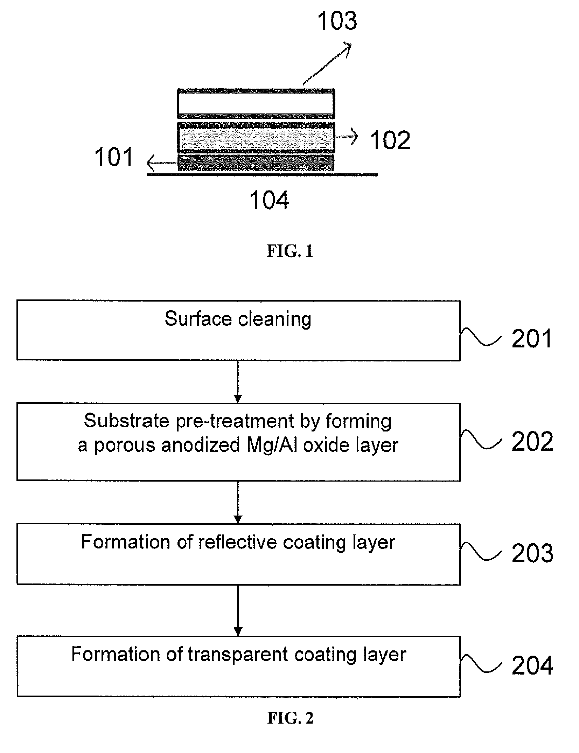

FIG. **1** is a schematic diagram of a thermal resistant mirror-like coating comprising a porous anodized Mg/Al oxide layer according to an embodiment of the presently claimed invention. The thermal resistant mirror-like coating comprises a porous anodized Mg/Al layer **101,** a reflective coating layer **102,** and an anodized Mg/Al layer **103.** The porous anodized Mg/Al layer **101** is formed on a Mg/Al alloy substrate **104,** and serves as a base coating layer. The reflective coating layer **102** is formed on the porous anodized Mg/Al layer **101.** The anodized Mg/Al layer **103** is formed on the reflective coating layer and serves as a transparent protective coating layer

Preferably, the thickness of the porous anodized Mg/Al layer **101** is 10 nm - 10 µm, the thickness of the reflective coating layer **102** is 1 - 100 µm, and the thickness of the anodized Mg/Al layer **103** is below 10 µm.

Since the porous anodized Mg/Al oxide layer is in porous structure, it can enhance the adhesion of the mirror like coating. In addition, due to strong bonding formed between oxygen and Mg or Al, the anodized Mg/Al oxide layer is hard, resistant to weak acid or alkali, and to heat even for a temperature higher than 1000°C.

FIG. **2** is flowchart showing the steps of a method for fabricating a thermal resistant mirror-like coating by anodization according to an embodiment of the presently claimed invention. The method comprises surface cleaning of a substrate in step **201,** substrate pre-treatment by formation of a base coating layer by anodization in step **202,** formation of a reflective coating layer in step **203,** and formation of a transparent coating layer in step **204.**

In step **201,** a surface of a Mg/Al substrate is cleaned. In step **202,** the substrate pretreatment by formation of a base coating layer by anodization further comprises the steps: polishing the Mg/Al substrate mechanically, and then chemically or electro-chemically; anodizing the polished Mg/Al substrate in a dilute acid to form a porous anodized magnesium oxide/anodized aluminum oxide layer with DC power; and cleaning the anodized Mg/Al substrate with water, drying them in oven, and then cooling down to room temperature. In step **203,** a reflective coating layer is coated on the porous anodized magnesium oxide/anodized aluminum oxide layer. In step **204,** a transparent coating layer comprising an anodized Mg/Al oxide layer with sealing is formed on the reflective coating layer.

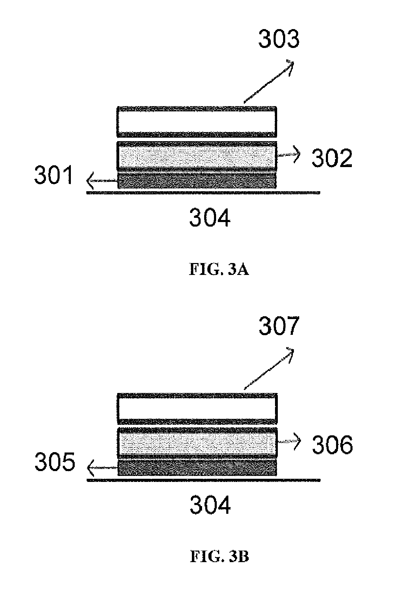

According to another embodiment of the presently claimed invention, the thermal resistant mirror-like coating is prepared by treatment with primer. FIG. **3A** is a schematic diagram of a thermal resistant mirror-like coating comprising a thermal resistant primer layer. The thermal resistant mirror-like coating comprises a thermal resistant primer layer **301,** a reflective coating layer **302,** and a transparent protective coating layer **303.** The thermal resistant primer layer **301** is formed on a metallic substrate **304,** and serves as a base coating layer. The reflective coating layer **302** is formed on the thermal resistant primer layer **301.** The transparent protective coating layer **304** is formed on the reflective coating layer **303.**

FIG. **3B** is a schematic diagram of a thermal resistant primer layer according to an embodiment of the presently claimed invention. The thermal resistant primer layer further comprises a first primer **305,** a second primer **306,** and a third primer **307.** The first primer **305** is coated on the metallic substrate **304.** The second primer **306** is sandwiched between the first primer **305** and the third primer **307.** The first primer **305** is to enhance the adhesion between the metallic substrate **304** and the second primer **306.** The second primer **306** is to enhance the adhesion between the first primer **305** and the third primer **307.** The third primer **307** is to enhance the adhesion between the second primer **306** and the reflective coating layer **302.**

The thermal resistant primer layer has lots of nano-sized pores, which enhance the adhesion of the reflective coating layer. The preferable thickness of the resistant primer layer is below 100µm.

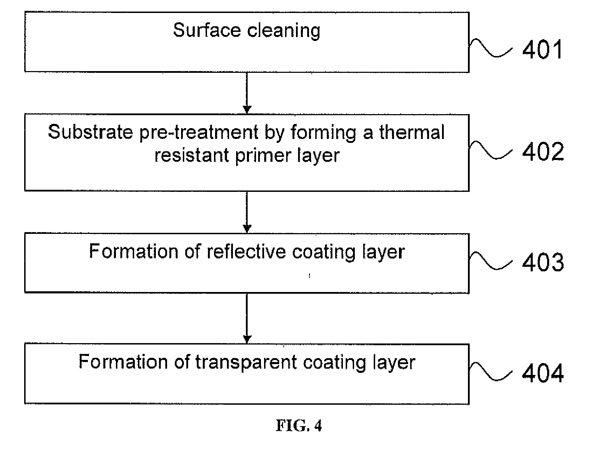

FIG. **4** is a flowchart showing the steps of a method for fabricating a thermal resistant mirror-like coating comprising a thermal resistant primer layer according to an embodiment of the presently claimed invention. The method comprises surface cleaning of a substrate in step **401,** substrate pre-treatment by forming a thermal resistant primer layer in step **402,** formation of a reflective coating layer in step **403,** and formation of a transparent coating layer in step **404.**

In step **401,** the surface of a metallic substrate is cleaned.

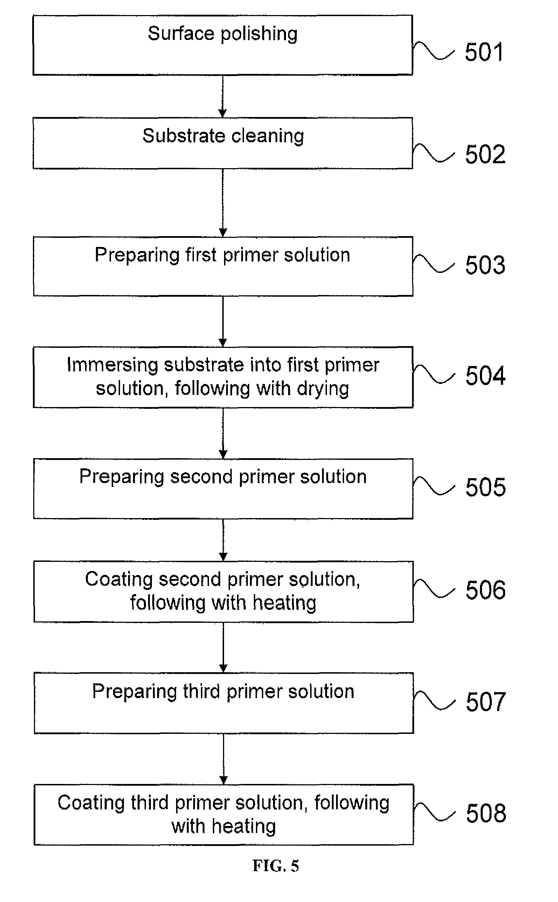

The step **402** of substrate pretreatment by forming a thermal resistant primer layer further comprises the steps as shown in FIG. **5****.** In step **501,** the metallic substrate is polished. In step **502,** the polished substrate is cleaned and dried. In step **503,** a first primer solution is prepared by mixing A1100 (γ-Aminopropyl triethoxysilane) with deionized (DI) water and ethanol. In step **504,** the cleaned and dried metallic substrate is immersed in the first primer solution, following with drying. In step **505,** a second primer solution is prepared by mixing a mixture 1A and a mixture 1B. The mixture 1A includes acetone, ethanol, leveling agent (such as BYK-361N), epoxy (such as low viscosity E-51 or E-44). The mixture 1B is composed of ethanol and solidifier of TZ-550 (phenolic amine curing agent for epoxy resin). In step **506,** the metallic substrate treated by the first primer solution is coated by the second primer solution by a brushing, dipping or spraying method, following with heating and drying. In step **507,** a third primer solution is prepared by mixing a mixture 2A and a mixture 2B by stirring vigorously. The mixture 2A includes Butanol-1-ol, 4-Hygroxy-4-methyl-2-pentanone, acetone, CGE (Glycidyl 2-methylphenyl ether), leveling agent (such as BYK-361N), epoxy (such as low viscosity E-51 or E-44). The mixture 2B is the solidifier of TZ-550. In step **508,** the metallic substrate treated by the first and the second primer solution, is coated by the third primer solution by a brushing, dipping or spraying method, following with heating and drying.

A reflective coating layer is then formed on the base coating by the following procedures. A roughening solution is prepared by mixing acetone and ethanol. A sensitizing solution is prepared by adding stannous chloride into concentrated hydrochloric acid. A soluble amine complex of silver is prepared by mixing solution of silver nitrate and sodium hydroxide, and then adding a suitable amount of ammonium hydroxide. A reducing sugar solution is prepared by dissolving glucose and citric acid into a mixed solution of water and ethanol.

The substrate is rinsed with the roughening solution. The metallic substrate is treated using the sensitization solution by dipping or spraying. The formation of decorative layer of mirror finish is achieved by mixing the soluble amine complex of silver and the reducing sugar solution, following with forming the decorative layer of mirror finish in the base coating layer by dipping or spraying.

A transparent protective coating layer can be produced to protect the below decorative coating layer of mirror finish. This protective layer might be another anodized metallic oxide layer or a surface coating layer of polysiloxane modified by nano-sized particles, such as TiO₂, SiO₂, Al₂O₃, ZrO₂, etc.

### Examples

### 1. Surface cleaning

The surface cleaning comprises the steps:
1) Immerse the metallic substrates into a mixture of DI water and cleanser essence. Sonicate the substrates for more than 10 min..
2) Rinse the samples one by one using running DI water.
3) Clean the substrates in 1:1 (vol.) acetone and ethanol by ultrasonication again for more than 10 min..
4) Rinse the substrates with running ethanol. Dry them in air.

### 2. Substrate pre-treatment

The surface pre-treatment comprises Method 2A for Mg or Al related metals, and other metals, such as Ti, which can be anodized in acidic or alkali solutions; or Method 2B for all metals.

Method 2A is to anodize Mg, Al or others such as Ti in acidic or alkali solutions to get porous anodized metal (Mg, Al, Ti) oxides, with mechanism shown below (Mg alloy or Al alloy). Detailed steps of the anodization are shown as follows.
1) Mg / Al related metals are polished mechanically, and then chemically or electro-chemically.
2) The polished Mg / Al related metals are anodized to form a very thin film of anodized magnesium oxide / anodized aluminum oxide.
3) Anodize Mg / Al related metals in dilute acid such as sulfuric, oxalic, phosphoric or chromic acid to form a porous metal oxide layer with DC power. Mg / Al related metals will be used as the anode. Aluminum, carbon, lead, stainless steel or platinum can be selected as the cathode. DC-powered anodization is carried out at 10 - 20°C in sulfuric acid of 10 - 20 wt% for more than 1 min. Voltage of 10 - 25 V or current density of 1.0 - 2.0 A/cm² is maintained throughout the anodization. Considering the environmental issues, sulfuric acid is recommended.
4) Clean the anodized substrates with running DI water, dry them in oven at 150°C for more than 10 min., and then cool them down to room temperature.

Method 2B is to coat thermal resistant primers (base coating layers) on metallic substrates, with followed mechanism. Detailed steps of coating thermal resistant primers are shown as follows:
1) Surface polishing: polish the metallic substrates with abrasive papers of #240, #360 and #800, respectively; vibrating grinder or drum grinder can also be used to polish the same substrates using suitable grinding stones.
2) Substrate cleaning: immerse the polished substrates into a mixture of DI water and cleanser essence. Sonicate the substrates for more than 10 min.. Rinse the samples one by one using running DI water. Clean the substrates in 1:1 (vol.) acetone and ethanol by ultrasonication again for more than 10 min.. Rinse the substrates with running ethanol. Dry them in air.

### 3) Substrate treatment by primer 1:

(1) Prepare primer 1 by mixing A1100 (γ-Aminopropyl triethoxysilane, a silicone coupling agent supplied by Momentive) with DI water and ethanol. Stir for more than 10 min. to obtain a uniform solution.
(2) Immerse the cleaned and dried substrates in primer 1, while ultrasonicating for more than 10 min.. Dry the samples in oven at 150°C for more than 10 min., and then cool them down to room temperature.

### 4) Substrate treatment by primer 2:

(1) Prepare primer 2 by mixing mixtures 1A and 1B by stirring vigorously. Degas the mixture by ultrasonication for more than 5 minutes. The mixture 1A includes acetone, ethanol, epoxy (such as low viscosity liquid bisphenol E-51 or E-44). The mixture 1B is composed of ethanol, leveling agent (such as BYK-361N), solidifier of TZ-550 (phenolic amine curing agent for epoxy resin). Accordingly, 1 kg of the mixture 1A includes 713.05 g of epoxy E-51 or E-44, 171.15 g of acetone, 15.80 g of ethanol. 1 kg of the mixture 1B includes 33.90 g of BYK361N, 636.80 g of TZ550 and 329.30 g of ethanol.
(2) Coat primer 2 on the metallic substrates treated by primer 1 by brushing, dipping or spraying. Heat the samples in an oven with temperature higher than 150oC for more than 10 min., or together with an IR drier. IR drier will accelerate the curing of primer 2.

### 5) Substrate treatment by primer 3:

(1) Prepare primer 3 by mixing mixtures 2A and 2B by stirring vigorously. Degas the mixture by ultrasonication for more than 10 min.. Accordingly, the mixture 2A includes Butanol-1-ol, 4-Hygroxy-4-methyl-2-pentanone, acetone, CGE (Glycidyl 2-methylphenyl ether), leveling agent (such as BYK-361N), and epoxy (such as low viscosity E-51 or E-44). The mixture 2B is the solidifier of TZ-550. Accordingly, 1 kg of the mixture 2A includes 135.05 g of butan-1-ol, 270.10 g of diacetone alcohol, 0.35 g of acetone, 2.65 g of glycidyl 2-methylphenyl ether (CGE), 4.30 g of BYK361N and 477.55 g of epoxy E-51 or E-44)
(2) Coat primer 3 on the metallic substrates treated by primer 1 and 2, by a brushing, dipping or spraying method. Heat the samples in an oven with temperature higher than 150°C for more than 10 min., or together with an IR drier. IR drier will accelerate the curing of primer 3.

### 3. Formation of reflective coating layer

The metallic substrates pre-treated by above methods and steps will then be coated by a reflective coating layer.

### 1) Preparation of reaction solutions.

(1) Prepare a roughening solution by mixing acetone and ethanol at a volume ratio of 1: 1 at room temperature, which will be stored in a bottle with a lid for later use.
(2) Prepare a sensitizing solution by adding stannous chloride into concentrated hydrochloric acid (36%) at room temperature until stannous chloride is solved, and then adding DI water to make the concentration of stannous chloride and hydrochloric acid in the solution to be 5g/L and 5g/L, respectively.
(3) Prepare a reaction solution A of [Ag(NH₃)₂]⁺ with a concentration of 10g/L by mixing solutions of silver nitrate and sodium hydroxide, and then adding suitable amount of 10% of ammonium hydroxide. Reaction can be observed from precipitation to dissolution. DI water will then be added into above solution until the concentration of [Ag(NH₃)₂]⁺ in the solution is 10g/L.
(4) Prepare a reaction solution B by dissolving glucose and citric acid into a mixed solution of water and ethanol. DI water will be added to make the concentration of glucose in the solution be 8g/L.

### 2) Fabrication of decorative coating layer of mirror finish.

(1) Substrate roughening: rinse the substrates treated by primer 1, 2 and 3 with the roughening solution and then DI water, respectively. Dry the samples in air or in an oven with temperature higher than 150°C. Cool them down to room temperature before being treated on next step, if heated in an oven.
(2) Substrate sensitizing: treat above samples using the sensitization solution by dipping or spraying, and then rinse the samples with running DI water. Dry the samples in air or in an oven with temperature higher than 150°C. Cool them down to room temperature before being treated on next step, if heated in an oven.
(3) Formation of decorative layer of mirror finish by dipping or spraying.

Method 3A is formation of decorative layer of mirror finish by dipping. At first, mix reaction solution A and B at a volume ratio of A: B = 1: 1∼2, and then immerse substrates pre-treated by the roughening and sensitizing steps at room temperature into above mixed solution immediately for 4∼6 min.. The reaction is carried out without stirring or vibration. Rinse the samples with DI water for more than 3 times, and dry at room temperature in air or in an oven with temperature higher than 150°C. Cool them down to room temperature before being treated on next step, if heated in an oven.

Method 3B is formation of decorative layer of mirror finish by spraying. At first, load reaction solution A and B into 2 separated containers, and then be released onto metallic substrates simultaneously. This can be achieved by a double/twin head spraying gun or 2 single head spraying guns.

### 4. Formation of transparent protective coating layer

A transparent protective coating layer will be produced to protect below decorative coating layer of mirror finish. This protective layer might be another anodized metallic oxide layer or a surface coating layer of polysiloxane modified by nano-sized particles, such as TiO₂, SiO₂, Al₂O₃, ZrO₂, etc..

Method 4A is to deposit Mg or Al on above samples fabricated by decorative coating layer of mirror finish, and then anodize them in acidic or alkali solution. Detailed steps of anodization are shown as follows.
1) Mg / Al related metals formed with decorative coating layer of mirror finish will be deposited using Mg or Al.
2) The samples will then be anodized to form a very thin film of anodized magnesium oxide / anodized aluminum oxide, in dilute acid such as sulfuric, oxalic, phosphoric or chromic acid to form a porous layer. Treated Mg / Al related metals will be used as the anode. Aluminum, carbon, lead, stainless steel or platinum can be selected as the cathode. DC-powered anodization is carried out at 10 - 20°C in sulfuric acid of 10 - 20 wt% for more than 1 min. Voltage of 10 - 25 V or current density of 1.0 - 2.0 A/cm² is maintained throughout the anodization. Considering the environmental issues, sulfuric acid is recommended.
3) Clean the anodized substrates with running DI water, dry them in oven at 150oC for more than 10 min., and then cool down to room temperature.

Method 4B is to coat a thermal resistant surface coating layer to protect below decorative coating layer of mirror finish. Detailed steps of coating the thermal resistant surface coating layer are shown as follows.
1) Prepare the surface coating mixture by mixing acetic acid, silanes, such as 3-glycidoxypropyltrimethoxysilane (A187), Tetraethylsilicate (TEOS) and methyltrimethoxysilane (MTMS) and DI water at room temperature, while sonicating for more than 3 minutes. Add DI water into above silane mixtures at room temperature, and then sonicate for 3 minutes.
2) Coat the surface coating layer on the substrates with decorative coating layer of mirror finish by dipping or spraying. While spraying, Butan-1-ol can be added to dilute the coating mixture. Heat the samples in an oven with temperature higher than 150°C for more than 10 min..

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A method for forming a thermal resistant mirror-like coating on a metal substrate, comprising:
providing the metal substrate;
anodizing a surface of the metal substrate to form a porous metallic oxide layer; and
forming a reflective coating layer on the porous metallic oxide layer.

2. The method of claim 1, wherein the step of anodizing the surface of the metal substrate to form the porous metallic oxide layer is performed with a direct current (DC) power at 10-20°C.

3. The method of claim 2, wherein the DC power provides a voltage of 10-25 V, or a current density of 1.0-2.0 A/cm².

4. The method of claim 1, wherein the metal substrate comprises aluminum (Al), magnesium (Mg), or Al/Mg alloy.

5. The method of claim 1, further comprising forming a transparent protective coating layer on the reflective coating layer.

6. The method of claim 5, wherein the transparent protective layer is an anodized metallic oxide layer with sealing.

7. The method of claim 5, wherein the step of forming the transparent protective coating layer on the reflective coating layer further comprises:
depositing a Mg layer or a Al layer on the reflective coating layer;
anodizing the Mg layer or the Al layer to form an anodized Mg oxide layer or an anodized Al layer; and
sealing the anodized Mg oxide layer or the anodized Al layer.

8. A method for forming a thermal resistant mirror-like coating on a metal substrate, comprising:
providing the metal substrate;
forming a thermal resistant primer layer on the metal substrate; and
forming a reflective coating layer on the thermal resistant primer layer.

9. The method of claim 8, wherein the step of forming the thermal resistant primer layer on the metal substrate further comprises:
preparing a first primer solution comprising a silicone coupling agent;
immersing the metal substrate into the first primer solution;
drying the first primer solution on the metal substrate to form a first primer;
preparing a second primer solution comprising a first leveling agent, a first epoxy, and a first solidifier of epoxy resin;
coating the second primer solution on the first primer;
heating the second primer solution to form a second primer;
preparing a third primer solution comprising 4-Hygroxy-4-methyl-2-pentanone, Glycidyl 2-methylphenyl ether, a second leveling agent, a second epoxy, and a second solidifier of epoxy resin;
coating the third primer solution on the second primer; and
heating the third primer solution to form a third primer.

10. The method of claim 9, wherein the first primer solution further comprises water and ethanol, the silicone coupling agent is γ-Aminopropyl triethoxysilane, the second primer solution further comprises acetone and ethanol, and the third primer solution further comprises Butanol-1-ol, and acetone.

11. The method of claim 8, wherein the step of forming the thermal resistant primer layer on the metal substrate further comprises:
polishing the metal substrate with an abrasive paper; and
cleaning the metal substrate in acetone and ethanol by ultrasonication.

12. The method of claim 8, further comprising forming a transparent protective coating layer on the reflective coating layer.

13. The method of claim 12, wherein the transparent protective coating layer comprises polysiloxane modified by nano-sized particles of TiO₂, SiO₂, Al₂O₃, ZrO₂.

14. The method of claim 12, wherein the step of forming the transparent protective coating layer on the reflective coating layer further comprises:
preparing a protective surface coating mixture by mixing acetic acid, silanes, and water;
coating the protective surface coating mixture on the reflective coating layer by dipping or spraying; and
heating the protective surface coating mixture on the reflective coating layer to form the transparent protective coating layer.

15. A thermal resistant mirror-like coating formed on a metal substrate, comprising:
a base coating layer formed on the metal substrate; and
a reflective coating layer formed on the base coating layer;
wherein the base coating layer is a porous anodized metal oxide layer, or a thermal resistant primer layer.
